# EUROPEAN PATENT APPLICATION

(11) **EP 1 375 224 A2**
(43) Date of publication of application: **02.01.2004**
(21) Application number: 03253803.5
(22) Date of filing: 17.06.2003
(51) Int. Cl.: B60J 7/08

(54) **Gas spring and air cylinder for lifting a variable height roller assembly**

(30) Priority: 18.06.2002 GB 0213996
(71) Applicant: Wood, Robert Arthur, Palm City, FL 34990 (US)
(72) Inventor: Wood, Robert Arthur, Palm City, FL 34990 (US)
(74) Representative: Brookes Batchellor

(57) **Abstract**

The present invention relates to a container cover (11). In particular it relates to a cover for a truck (20) having a material carrying container (10), such as a roll-on/roll-off truck, skip lorry, or tipper truck. There is described a cover assembly for the container of a vehicle; the container having first and second ends and the cover assembly comprising a variable height tower assembly (4) having a retractable cover with a first end (3) attached to the tower assembly and a second end (12) attached to a cover support element, the tower assembly (4) being movable in height by way of the combined lifting forces of at least one pneumatic cylinder (1) and at least one gas spring (2), between a first position adjacent the top edge of the container at the first end thereof, and a second position that is more greatly spaced above the top of the container.

## Description

The present invention relates to a container cover. In particular, it relates to a device used for covering the open top of vehicular containers that are carried by or on trucks, trailers, roll-on/roll-off hoists, and similar vehicles.

There are many variations of covering systems that pull a flexible cover over the top of an open top container mounted to or carried on a truck or trailer chassis. Some covering systems such as that disclosed in US Patent 6206448 (Hy-Tower) incorporate an adjustable height tower fixed to the chassis in front of the container, that raises a roller assembly and flexible cover high above the height of the container in order to manually pull the flexible cover with a rope over the open top of a container. Other covering systems such as that disclosed in US Patent 3,868,142 (Pioneer 1973) incorporate a similar adjustable height tower that raises the roller assembly and uses pivoting arms to pull the flexible cover over the open top of the container.

The conventional means for raising the tower and roller assembly in front of the container is a hydraulic cylinder even though some prior art discloses alternative methods including a pneumatic cylinder to raise the tower and front roller assembly. There are several problems with the conventional hydraulic or pneumatic means of raising and lowering the tower. The problem with hydraulics is that hydraulic components are costly both to purchase and to install on a truck. Often a separate electric over hydraulic pump and reservoir is used as the power source for the cylinder that raises the tower and roller assembly. This pump is costly and adds the potential for electric or mechanical failures. If an external hydraulic pump is not used, the hydraulic power to raise and lower the tower and roller assembly must come from the on-board hydraulic systems of the truck. This often involves a costly installation procedure and several additional hydraulic hoses, fittings and control valves to operate the system. The advantage of hydraulics is the force that can be generated to lift the heavy tower and roller assembly. This is where a pneumatic cylinder falls short. In order to achieve the same forces generated by hydraulics, a much larger cylinder bore must be used which again adds cost and bulkiness to the system. Another problem with pneumatics involves the compressibility of air, thereby exerting an often inconsistent and jerky motion throughout the stroke of the pneumatic cylinder. Also, when lifting heavy loads, a pneumatic cylinder alone is less safe than hydraulics. If an air line is cut or disconnected, air can escape much faster than hydraulic fluid and therefore could send the heavy tower and roller assembly crashing down with a lot of force. Accordingly, the present invention seeks to address these problems in the prior art.

According to the present invention there is provided a cover assembly for the container of a vehicle having a container having first and second ends and the cover assembly comprising a variable height tower assembly having a retractable cover with a first end attached to the tower assembly and a second end attached to a cover support element; wherein the tower assembly is movable in height by way of the combined lifting forces of at least one pneumatic cylinder and at least one gas spring, between a first position adjacent the top edge of the container at the first end thereof, and a second position that is more greatly spaced above the top of the container.

Preferably, the vehicle has an onboard air-supply and the air supply to the at least one pneumatic cylinder is derived from the onboard air supply of the vehicle.

Preferably, the at least one pneumatic cylinder comprises a double acting cylinder.

Suitably, the cover support element is attached to at least one pivot arm, each pivot arm having an upper end and a lower end and being pivotable about a lower end thereof at a point intermediate the two ends of the container and adjacent the bottom of the container, between a first position in which the cover support element is adjacent the first end of the container and a second position in which the cover support element is adjacent the second end of the container.

Alternatively, the cover support element is attached to a rope for manually pulling between a first position in which the cover support element is adjacent the first end of the container and a second position in which the cover support element is adjacent the second end of the container.

In one embodiment, the tower assembly comprises a single pedestal telescopic assembly.

Preferably, the at least one pneumatic cylinder and the at least one gas spring are located on opposing sides of the single telescopic pedestal.

In an alternative embodiment, the tower assembly comprises a double pedestal telescopic assembly.

Suitably, the at least one gas spring comprises two or more gas springs configured end-to-end.

Suitably, the tower assembly comprises one or more cable and pulley assemblies to lift one or more stages of telescopic pedestal sections.

Advantageously, the force required to move the tower assembly between the first position and the maximum extended height of the tower assembly, is greater than the maximum force generated by the at least one pneumatic cylinder alone.

Advantageously, the force required to move the tower assembly between the first position and the maximum extended height of the tower assembly, is greater than the maximum force generated by the at least one gas spring alone.

Preferably, the pneumatic control valves to actuate the lifting force of the at least one pneumatic cylinder, automatically lowers said tower assembly if the vehicle is moved when tower is in the raised position.

The above and other aspects of the present invention will now be described in further detail, by way of example only, with reference to the accompanying drawings, in which:
Figure 1 is a schematic rear view of a first embodiment of a variable height tower assembly in a single pedestal telescopic configuration, in a retracted or lowered position.
Figure 2 is a schematic rear view of the embodiment of Figure 1 in an extended or raised position.
Figure 3 is a schematic rear view of a second embodiment of a variable height tower assembly in a double pedestal telescopic configuration, in a retracted or lowered position.
Figure 4 is a schematic rear view of the embodiment of Figure 3 in an extended or raised position.
Figure 5 illustrates in schematic detail, a pneumatic cylinder in accordance with the present invention in an extended position.
Figure 6 illustrates in schematic detail, a gas spring in accordance with the present invention in an extended position.
Figure 7 is a schematic side view of an apparatus in accordance with the present invention in the retracted position, mounted on a container carrying vehicle having a pivot arm assembly in the uncovered position.
Figure 8 is a schematic side view of an apparatus in accordance with the present invention in the extended position, mounted on a container carrying vehicle having a pivot arm assembly in the covered position.
Figure 9 is a schematic side view of an apparatus in accordance with the present invention in the retracted position, mounted on a container carrying vehicle having a pivot arm assembly in the covered position.
Figure 10 is a schematic side view of an apparatus in accordance with the present invention in the extended position, mounted on a container carrying vehicle having a manual pull-style assembly in the process of covering the container.
Figure 11 is a schematic side view of an apparatus in accordance with the present invention in the retracted position, mounted on a container carrying vehicle having a manual pull-style assembly in the covered configuration.

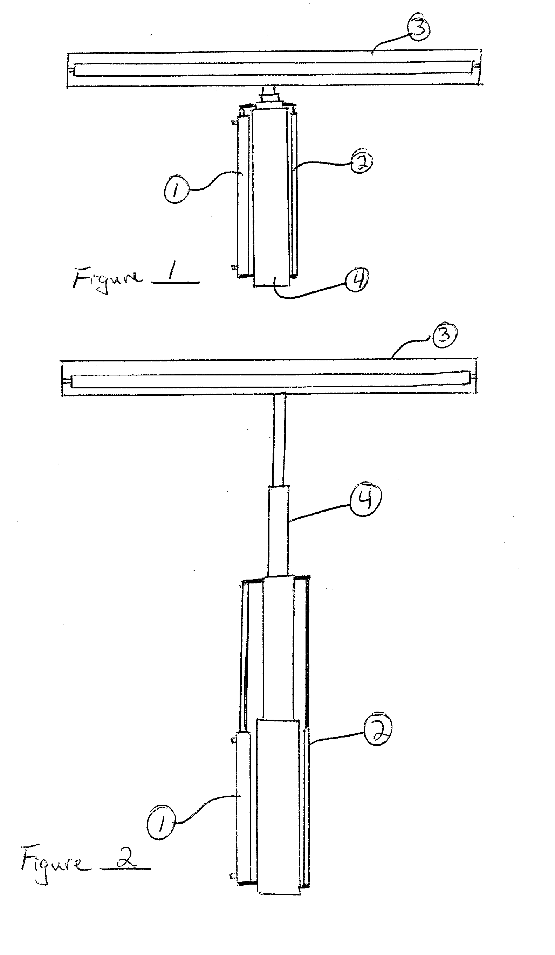

With reference initially to Figures 1 and 2, there is illustrated a first embodiment of the apparatus of the invention without reference to the vehicle or container that accompany it during the normal functioning and operation of the invention. These features can be seen generally in Figures 7 to 11. The first embodiment is a single pedestal telescopic configuration of a variable height tower assembly 4 including roller assembly 3 which is a component of the tower. A pneumatic cylinder 1 is attached to the base leg of the tower assembly 4 at one end of cylinder 1, and attached to the roller assembly 3 or an intermediate stage of tower 4, at the other end of the cylinder. A gas spring 2 is mounted on the opposite side of the single pedestal and is attached to the base leg of the tower assembly 4 at one end of gas spring, and attached to the roller assembly 3 or an intermediate stage of tower 4, at the other end of the gas spring. Figure 1 illustrates the tower assembly in the retracted or lowered position, and Figure 2 illustrates the tower assembly in the extended or raised position.

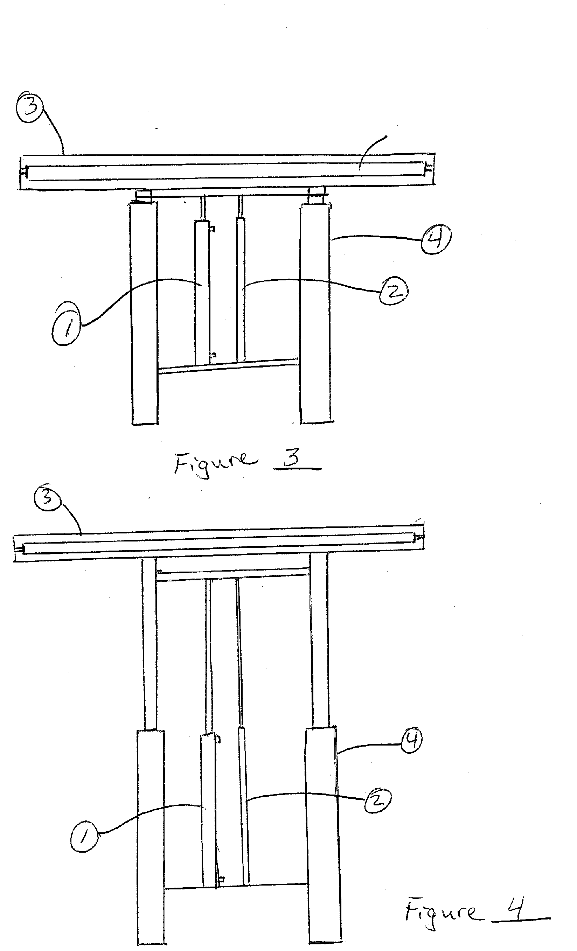

With reference to Figures 3 and 4, there is illustrated an alternative embodiment of the apparatus of the invention. This alternative embodiment is a double pedestal telescopic configuration of a variable height tower assembly 4 including roller assembly 3 which is a component of the tower. Pneumatic cylinder 1 and gas spring 2 are mounted between the double leg pedestals and attached at one end to the base leg of the tower assembly 4, and attached at the other end to the roller assembly 3 or an intermediate stage of tower 4. Figure 3 illustrates the tower assembly in the retracted or lowered position, and Figure 4 illustrates the tower assembly in the extended or raised position.

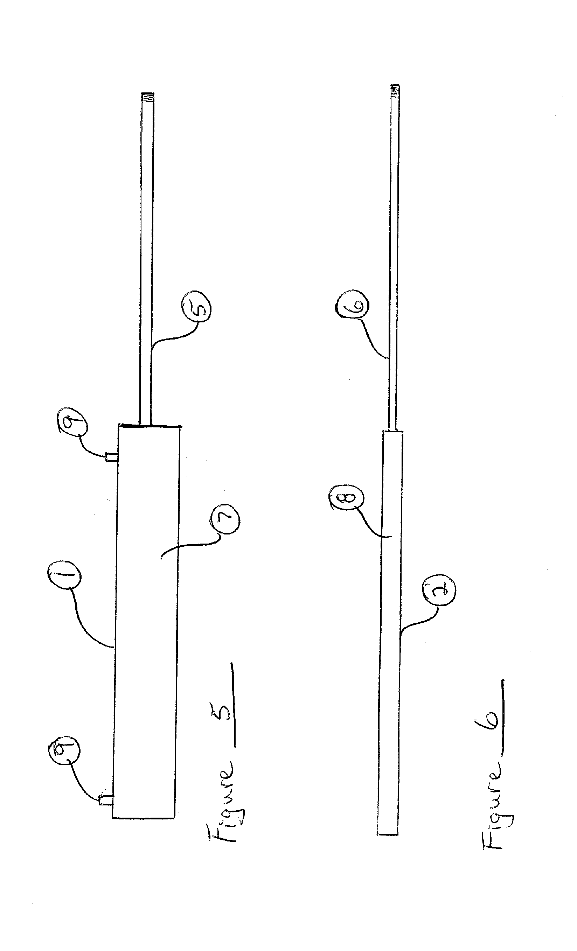

Figure 5 shows a pneumatic or air cylinder. Either a single acting cylinder or double acting cylinder may be used, but Figure 5 shows a double acting cylinder with two ports 9 in which air enters and exits under pressure to drive the rod 5 of the cylinder to an extended or retracted position. Figures 5, 2 and 4 show the air cylinder 1 in an extended position in which case air is forced into the bore 7 through port 9 furthest away from rod 5 and exhausts out of port 9 closest to rod 5. Figures 1 and 3 show the air cylinder in the retracted position in which case air is forced into bore 7 through port 9 closest to rod 5 and exhausts air out of port 9 farthest from rod 5. In the case of a single acting cylinder, there would not be a port 9 closest to rod 5 that drives the cylinder to the retracted position. Instead, the weight of the tower and roller assembly would act with gravity to force the tower 4 to the lowered position and cylinder 1 to the retracted position by exhausting air out of port 9 farthest from rod 5.

Figures 6, 2, and 4 show gas spring 2 in the extended position. High pressure gas is stored in the bore 8 of gas spring 2 which forces rod 6 to want to extend at all times. A counter force of equal or greater strength is necessary to retract the gas spring, thereby driving rod 6 into bore 8. Gas spring 2 does not have any ports. The high pressure gas is self contained within the bore 8. Figures 1 and 3 show the tower assemblies and the gas springs in the lowered or retracted position. The weight of the tower combined with the force of the air cylinder 1 when using a double acting cylinder, drives the gas spring to the retracted position shown in Figures 1 and 3.

Figures 7 to 11 show embodiments of the invention mounted operatively upon a truck 20 having, amongst the usual features, a chassis 21, pairs of road wheels 22 and a driver's cab 23.

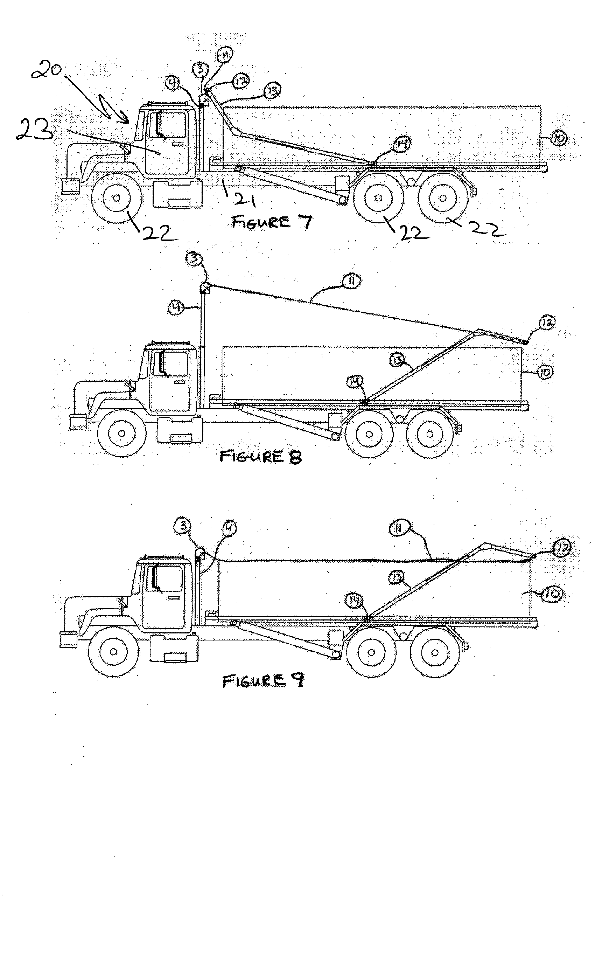

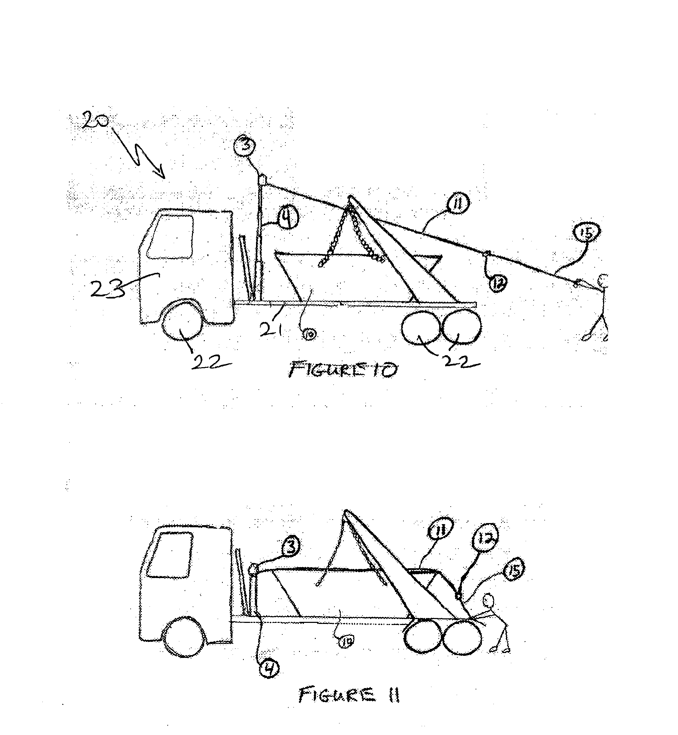

Figures 7, 8, and 9 illustrate an embodiment of the apparatus of the present invention in a configuration in which a pivot arm assembly 13 is attached to a cover support element 12 and carries flexible cover 11 over the open top of container 10. Pivot arms 13 are attached to the truck frame or container body at pivot points 14 and pivot about pivot points 14. In the uncovered position of Figure 7, the variable height tower assembly 4 is in the retracted or lowered position and the pivot arms 13 are in the forward uncovered position. In Figure 8, the variable height tower assembly is raised to lift the flexible cover away from the container and contents thereof. When pivot arms 13 reach the rear of the container, the tower 4 is again lowered to fully cover the container as shown in Figure 9.

Figures 10 and 11 illustrate an embodiment of the apparatus of the present invention in a different configuration in which a flexible line 15 is attached to a cover support element 12 to manually pull flexible cover 11 over the open top of container 10. Figure 10 illustrates the variable height tower assembly 4 in the extended or raised position while the flexible cover 11 is pulled over the container. In Figure 11, the variable height tower assembly is lowered and the flexible line 15 is secured near the rear of the container to fully cover the container.

In order to reduce cost and optimize performance, the current invention incorporates a pneumatic cylinder in combination with a gas spring to raise and lower the tower and roller assembly. This combination of pneumatic cylinder and gas spring offers only the advantages and none of the disadvantages of hydraulics and pneumatics alone.

First, the greater forces normally attained only through the use of hydraulics or large bore pneumatic cylinders can be obtained through the combination of a gas spring and smaller bore air cylinder. This is because gas springs can produce high forces of more than 500 ft lbs. from a small bore spring. When the force of a gas spring is set to equal the force required to lift the tower and roller assembly, a smaller bore air cylinder installed along side the gas spring needs very little force to raise and lower the tower and roller assembly. This is because the gas spring is bearing most or all of the weight required to lift the tower, making it appear virtually weightless to the air cylinder that now acts as the actuating means and not the lifting means for the tower and roller assembly.

The second advantage of a combination gas spring and pneumatic cylinder to raise the tower and roller assembly is safety. The counter force exerted by the gas spring prevents the tower and roller assembly from crashing down if an air source to the air cylinder is lost or an air line is cut or disconnected. The tower and roller assembly will either remain in the position it was at the time of the air line breakage, or it will descend at its normal speed due to the counter force that is constantly applied by the gas spring.

A third advantage is lower cost compared to hydraulics. The cost of gas springs are low and a small bore air cylinder tapped into the vehicle's on-board air system is also low cost compared to tapping into a vehicle's hydraulic system, or needing an external hydraulic pump assembly. Air lines are inexpensive and easy to route for installation purposes, and quick push-in fittings are also inexpensive and quick and easy to work with.

The inconsistent or jerkiness of movement as the pneumatic cylinder extends and contracts is also eliminated when combined with a gas spring because most of the workload required to lift the tower and roller assembly is transferred to the gas spring and therefore the air cylinder operates under much reduced forces with less compression of air, thereby producing smooth and consistent movement of the tower and roller assembly.

Lastly in the case where a single hydraulic or pneumatic cylinder is used to lift a single pedestal telescopic tower and roller assembly such as disclosed in US Patent 6206448 and 6250709 (Hy-Tower and Pioneer), the force exerted by the single cylinder creates an imbalance of forces on the tower with all of the force originating from one side of the tower. This can create a tilting of the tower in a direction away from the side that the cylinder is located on. These unequal forces can also cause the roller assembly to tilt to one side and not be horizontal to the ground as is required to roll up a flexible cover evenly onto the roller assembly. A gas spring mounted to the side opposite the air cylinder as disclosed in the current invention provides for equal force exerted on both sides of the tower, thereby eliminating a leaning tower and tilted roller assembly.

## Claims

1. A cover assembly for the container of a vehicle; said container having first and second ends and said cover assembly comprising a variable height tower assembly having a retractable cover with a first end attached to said tower assembly and a second end attached to a cover support element, said tower assembly being movable in height by way of the combined lifting forces of at least one pneumatic cylinder and at least one gas spring, between a first position adjacent the top edge of said container at the first end thereof, and a second position that is more greatly spaced above the top of said container.

2. A cover assembly as claimed in Claim 1 wherein the vehicle has an onboard air supply and the at least one pneumatic cylinder is provided with an air supply derived from said vehicle's onboard air supply.

3. A cover assembly as claimed in claim 1 or claim 2 wherein said at least one pneumatic cylinder comprises a double acting cylinder.

4. A cover assembly as claimed in any preceding claim wherein said cover support element is attached to at least one pivot arm, said pivot arm being pivotable about a lower end thereof at a point intermediate said two ends of said container and adjacent the bottom of said container, between a first position in which said cover support element is adjacent said first end of said container and a second position in which said cover support element is adjacent said second end of said container.

5. A cover assembly as claimed in any one of claims 1 to 3 wherein said cover support element is attached to a flexible line and is manually pulled between a first position in which said cover support element is adjacent said first end of said container and a second position in which said cover support element is adjacent said second end of said container.

6. A cover assembly as claimed in any preceding claim wherein said tower assembly comprises a single pedestal telescopic assembly.

7. A covering assembly as claimed in Claim 6 wherein said at least one pneumatic cylinder and said at least one gas spring are located on opposing sides of said single telescopic pedestal.

8. A cover assembly as claimed in any one of claims 1 to 5 wherein said tower assembly comprises a double pedestal telescopic assembly.

9. A cover assembly as claimed in any preceding claim wherein said at least one gas spring comprises two or more gas springs configured end-to-end.

10. A cover assembly as claimed in any preceding claim wherein said tower assembly comprises one or more cable and pulley assemblies to lift one or more stages of telescopic pedestal sections.

11. A covering assembly as claimed in any preceding claim wherein the force required to move said tower assembly between said first position and the maximum extended height of said tower assembly, is greater than the maximum force generated by said at least one pneumatic cylinder alone.

12. A covering assembly as claimed in any preceding claim wherein the force required to move said tower assembly between said first position and the maximum extended height of said tower assembly, is greater than the maximum force generated by said at least one gas spring alone.

13. A cover assembly as claimed in any of the above claims further comprising pneumatic control valves configured to actuate the lifting force of said at least one pneumatic cylinder, automatically lowers said tower assembly if said vehicle is moved when tower is in the raised position.
